(19) Europäisches Patentamt
European Patent Office
Office européen des brevets

(11) **EP 3 109 610 B1**

## (12) EUROPÄISCHE PATENTSCHRIFT

(45) Veröffentlichungstag und Bekanntmachung des Hinweises auf die Patenterteilung:
**09.10.2019 Patentblatt 2019/41**

(51) Int Cl.:
*F16H 1/28* *(2006.01)*     *G01L 5/24* *(2006.01)*
*G01L 3/10* *(2006.01)*

(21) Anmeldenummer: **16172064.4**

(22) Anmeldetag: **31.05.2016**

(54) **GETRIEBE FÜR KLEIN- UND KLEINSTANTRIEB MIT DREHMOMENTMESSGLIED**

TRANSMISSION FOR SMALL AND MINIATURE DRIVE WITH TORQUE MEASURING MEMBER

ENGRENAGE POUR PETIT ENTRAINEMENT COMPRENANT UN DISPOSITIF DE MESURE DE COUPLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2015 DE 102015110353**

(43) Veröffentlichungstag der Anmeldung:
**28.12.2016 Patentblatt 2016/52**

(73) Patentinhaber: **Dr. Fritz Faulhaber GmbH & Co. KG 71101 Schönaich (DE)**

(72) Erfinder: **SCHWENKER, Frank 73230 Kirchheim unter Teck (DE)**

(74) Vertreter: **Patent- und Rechtsanwälte Dr. Solf & Zapf Schlossbleiche 20 42103 Wuppertal (DE)**

(56) Entgegenhaltungen:
**EP-A1- 1 719 991     US-B1- 6 694 828**

EP 3 109 610 B1

**Beschreibung**

Die Erfindung betrifft ein Getriebe für einen elektrischen Klein- oder Kleinstantrieb, aufweisend ein Getriebegehäuse, in dem eine Getriebemechanik angeordnet ist, einen Befestigungsflansch zur Befestigung des Getriebes an einer Anwendung, eine in mindestens einem Abtrieblager gelagerte Abtriebwelle zum Antreiben der Anwendung, wobei die Abtriebwelle über die Getriebemechanik mit dem Klein- oder Kleinstantrieb verbindbar ausgebildet ist, und ein Drehmomentmessglied zur Erfassung des an der Abtriebwelle beim Betrieb des Klein- oder Kleinstantrieb anfallenden Drehmomentes mittels eines biegeelastischen Elementes.

Klein- oder Kleinstantriebe sind im Sinne der Erfindung elektrische Antriebe mit einer Dauerleistung von maximal 1000 W.

Getriebe für elektrische Klein- oder Kleinstantriebe führen insbesondere zu einer Vervielfachung des vom Motor erzeugten Momentes am Getriebeabtrieb bei gleichzeitiger Reduzierung der Abtriebsdrehzahl um ein Untersetzungsverhältnis. Aufgrund von Verlusten aus Reibung, dem Einfluss des Untersetzungsverhältnisses sowie der daraus resultierenden Getriebeselbsthemmung werden am Abtrieb wirkende Momente nicht immer proportional zur Untersetzung an den Motor weitergeleitet. Damit kann anhand einer Messung des Motormomentes nicht immer direkt auf das am Getriebeabtrieb vorliegende Moment geschlossen werden. Um dies trotzdem zu ermitteln, kann das Abtriebsmoment gemessen werden.

Drehmomente lassen sich beispielsweise durch Bestimmung der resultierenden Verformung von elastischen Bereichen des biegeelastischen Elementes messen. Die Messung von Verformung direkt an der bewegten Abtriebwelle ist dabei insbesondere in feinwerktechnischen Dimensionen aufgrund der beengten Platzverhältnisse sehr aufwändig. Eine Messung des Reaktionsmomentes umgeht die Notwendigkeit, Informationen von und zu bewegten Teilen zu übermitteln. Sehr häufig werden für Messungen von Kräften, Momenten und den daraus resultierenden Verformungen Dehnmessstreifen eingesetzt.

Aus der DE 10 2006 057 539 A1 ist zum Beispiel ein Drehmomentmessglied mit Dehnmessstreifen für eine Planetengetriebevorrichtung bekannt. Aufgrund der sehr geringen Änderungen der elektrischen Eigenschaften sind spezielle Auswertelektroniken mit Messwertverstärkern notwendig, welche in der Regel die Signale von mehreren Dehnmessstreifen voraussetzen. Die Dehnmessstreifen müssen auf das verformende Element fest aufgebracht und elektrisch kontaktiert werden. Neben dem Montageaufwand ist die Zugänglichkeit insbesondere zum Aufbringen der Sensoren unter beengten Bauraumverhältnissen problematisch.

In der EP 1 719 991 A1 und in der US 6,694,828 sind jeweils Drehmomentmessglieder beschrieben, bei denen radial verlaufende elastische Streben eine zentrale Nabe mit einem umfangsgemäß verlaufenden Ring verbinden. Dies hat den Nachteil, dass für eine verbesserte Empfindlichkeit hinsichtlich Rotationsdrehmomenten die radiale Ausdehnung, d.h. die Länge der Streben 4a, vergrößert werden muss. Dies erfordert einen relativ großen Bauraum in radialer Richtung.

Der Erfindung liegt die Aufgabe zugrunde, ein Getriebe mit einem Drehmomentmessglied zur Messung des Drehmomentes an der Abtriebwelle zur Verfügung zu stellen, das besonders klein und kompakt ausgebildet ist, einfach und kostengünstig herzustellen und zu montieren ist und flexibel einsetzbar ist.

Die Aufgabe wird erfindungsgemäß durch die Merkmale des kennzeichnenden Teils des Anspruchs 1 gelöst. An dem biegeelastischen Element ist ein magnetisches Gebersystem mit einem magnetfelderzeugenden Element und einem magnetfeldmessenden Element zur Messung einer rotatorischen Auslenkung des biegeelastischen Elementes angeordnet, wobei das biegeelastische Element axial zwischen der Getriebemechanik und dem Befestigungsflansch angeordnet ist, und das biegeelastische Element mindestens drei axial parallel zur Abtriebwelle verlaufende Streben umfasst, und die Streben des biegeelastischen Elementes eine radiale Höhe aufweisen, die mindestens doppelt so groß ist wie eine tangentiale Dicke, und eine axiale Länge aufweisen, die mindestens viermal so groß ist wie die tangentiale Dicke, und das magnetfelderzeugende Element von dem magnetfeldmessenden Element beabstandet im Zwischenraum der Streben an dem biegeelastischen Element angeordnet ist, wobei das magnetfelderzeugende Element an einem ersten Teilelement des biegeelastischen Elementes angeordnet ist, welches mit einer ersten axialen Extremität des biegeelastischen Elementes verbunden ist, und das magnetfeldmessende Element an einem zweiten Teilelement des biegeelastischen Elementes angeordnet ist, welches mit einer gegenüberliegenden zweiten axialen Extremität des biegeelastischen Elementes verbunden ist.

Hierdurch wird eine besonders kompakte Bauform ermöglicht. Insbesondere die Verwendung eines magnetischen Gebersystems erlaubt eine präzise Erfassung des Drehmomentes mit wenig Aufwand und einfacher Montage. Durch eine derartige Ausgestaltung wird eine hohe Steifigkeit, somit Unempfindlichkeit bezüglich radialer Störkräfte, und eine niedrige Steifigkeit, somit hohe Empfindlichkeit hinsichtlich Rotationsdrehmomenten erzielt.

In einer vorteilhaften Ausführungsform der Erfindung umschließt das biegeelastische Element die Abtriebwelle umfangsgemäß, wobei es ein an der Abtriebwelle anfallendes Drehmoment in eine rotatorische Auslenkung des biegeelastischen Elementes umwandelt.

In einer Ausführungsform bilden das Drehmomentmessglied, der Befestigungsflansch und der Abtrieblagerflansch eine modulare Funktionsbaugruppe, die unabhängig von einem Getriebegehäuse mit der Getriebemechanik und der Abtriebwelle zusammensetzbar und als ein zusammengesetztes Teil auf die Abtriebwelle aufsetzbar ausgebildet ist. Vorzugsweise sind das biegeelastische Element und der Befestigungsflansch einteilig ausgebildet. Insbesondere umfasst der Abtrieblagerflansch mindestens zwei Abtrieblager, wobei ein oder zwei Abtrieblager axial innerhalb des biegeelastischen Elements angeordnet sind. Dies verringert weiterhin den Bauraum und vereinfacht die Montage des Getriebes.

Insbesondere ist das magnetische Gebersystem derart an dem biegeelastischen Element angeordnet, dass bei einer rotatorischen Auslenkung des biegeelastischen Elementes das magnetfelderzeugende Element zu dem magnetfeldmessenden Element tangential verschoben wird.

Insbesondere ist das magnetfelderzeugende Element von dem magnetfeldmessenden Element vorteilhafterweise radial, axial oder tangential beabstandet an dem biegeelastischen Element angeordnet.

Weiterhin ist es vorteilhaft, wenn ein mechanischer Überlastschutz zwischen den Streben des biegeelastischen Elementes angeordnet ist. Dabei ist der Überlastschutz insbesondere als ein mechanischer Anschlag ausgebildet, wobei der Anschlag zwischen der einen und der anderen axialen Seite des biegeelastischen Elementes wirkt und somit einer zu weiten Verdrehung bei zu großen Antriebsmomenten entgegenwirkt.

Weitere vorteilhafte Ausgestaltungen der Erfindung ergeben sich aus der folgenden Figurenbeschreibung und den abhängigen Unteransprüchen.

Es zeigen:

Fig. 1     eine schematische Darstellung einer Verwendung eines elektrischen Kleinstantriebs mit verbundenem Getriebe und angedeuteter Anwendung,

Fig. 2     eine schematische Darstellung eines Teilschnitts durch eine erste Ausführungsform eines erfindungsgemäßen Getriebes mit Drehmomentmessglied,

Fig. 3     eine schematische Darstellung eines Teilschnitts durch eine zweite Ausführungsform eines erfindungsgemäßen Getriebes mit Drehmomentmessglied,

Fig. 4a    eine schematische Darstellung einer Seitenansicht eines Drehmomentmessgliedes von einem erfindungsgemäßen Getriebe, und

Fig. 4b    eine schematische Darstellung eines Querschnitts durch ein biegeelastisches Element eines Drehmomentmessgliedes von einem erfindungsgemäßen Getriebe.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

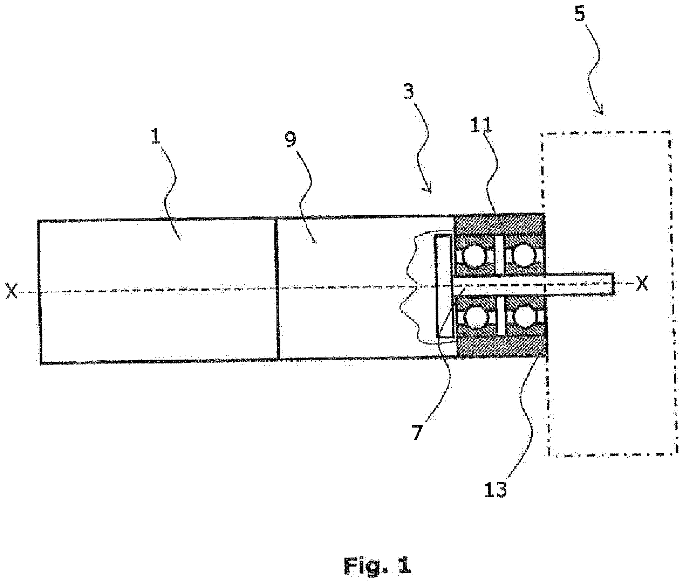

Fig. 1 zeigt eine schematische Darstellung einer beispielhaften Verwendung eines Klein- oder Kleinstantrieb 1 mit einem verbundenen Getriebe 3 zum Antreiben einer gestrichelt angedeuteten Anwendung 5 über eine Abtriebwelle 7 des Getriebes 3. Das Getriebe 3 kann insbesondere als ein Planetengetriebe ausgebildet sein und umfasst eine entsprechende, nicht dargestellte Getriebemechanik, die vorzugsweise in einem Getriebegehäuse 9 angeordnet ist. Die Abtriebwelle 7 ist insbesondere mittels zweier Abtrieblager 8 gelagert und über die Getriebemechanik mit einer nicht dargestellten Antriebswelle des Klein- oder Kleinstantriebes 1 verbindbar. Die Abtrieblager sind in einem Abtrieblagerflansch 11 angeordnet. Der Abtrieblagerflansch 11 bildet stirnseitig zur Anwendung 5 hin einen Befestigungsflansch 13 des Getriebes 3. Das Getriebe 3 ist mittels des Befestigungsflansches 13 mit der Anwendung 5, insbesondere mit einem Gehäuse der Anwendung 5, verbindbar. Der Abtrieblagerflansch 11 und der Befestigungsflansch 13 sind insbesondere einteilig ausgebildet.

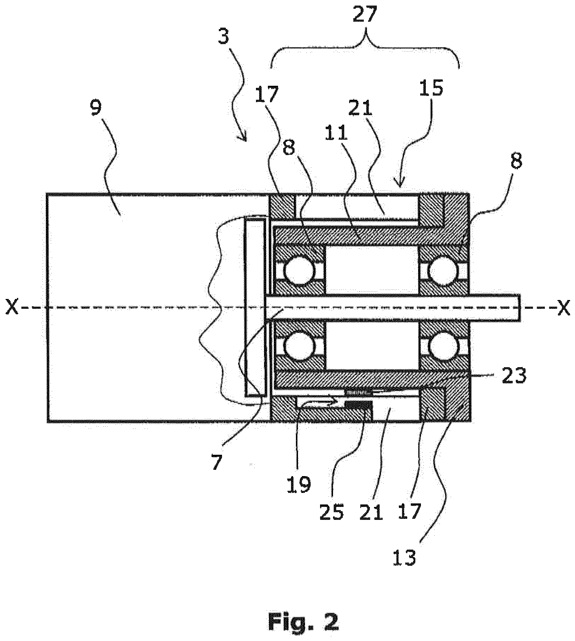

Fig. 2 zeigt eine schematische Darstellung eines Teilschnitts durch eine erste Ausführungsform eines erfindungsgemäßen Getriebes 3 mit einem Drehmomentmessglied 15 zur Erfassung des an der Abtriebwelle 7 beim Betrieb des Klein- oder Kleinstantrieb 1 anfallenden Drehmomentes. Das Drehmomentmessglied 15 ist insbesondere käfigartig ausgebildet.

Das Drehmomentmessglied 15 umfasst mindestens ein biegeelastisches Element 17 und ein an dem biegeelastischen Element 17 angeordnetes magnetisches Gebersystem 19 zur Messung einer rotatorischen Auslenkung des biegeelastischen Elementes 17. Das biegeelastische Element 17 ist vorzugsweise axial zwischen der Getriebemechanik beziehungsweise dem Getriebegehäuse 9 und dem Befestigungsflansch 13 angeordnet. Insbesondere umschließt das biegeelastische Element 17 die Abtriebwelle 7 umfangsgemäß, wobei es ein an der Abtriebwelle 7 anfallendes Drehmoment in eine rotatorische Auslenkung des biegeelastischen Elementes 17 umwandelt. Dies ermöglicht ein Messen des abstützenden Reaktionsmomentes, das über die Abtriebwelle 7 und das Getriebegehäuse 9 und der Getriebemechanik an das biegeelastische Element 17 übertragen wird.

In einer bevorzugten Ausführungsform sind in dem Abtrieblagerflansch 11 mindestens zwei Abtrieblager 8 angeordnet, wobei mindestens ein, vorzugsweise zwei Abtrieblager 8 axial innerhalb des biegeelastischen Elements 17 angeordnet sind.

Alternativ oder ergänzend kann es auch besonders vorteilhaft sein, wenn ein Abtrieblager 8 axial vor dem biegeelastischen Element 17 und ein weiteres Abtrieblager 8 axial hinter dem biegeelastischen Element 17 angeordnet ist.

In einer besonderen Ausgestaltung des Drehmomentmessgliedes 15 umfasst das biegeelastische Element 17 axial parallel zur Abtriebwelle 7 verlaufende Streben 21, vorzugsweise mehr als zwei Streben 21. Insbesondere ist die Anordnung der Streben 21 oder Gruppen von Streben 21 des biegeelastischen Elementes 17 am Umfang der Abtriebwelle 7 gleichverteilt angeordnet. Dabei ist es besonders vorteilhaft, wenn der Abstand der Streben 21 des biegeelastischen Elementes 17 innerhalb einer Gruppe von Streben 21 kleiner als der Abstand der Streben 21 von einer Gruppe von Streben 21 zur nächsten Gruppe von Streben 21 ist.

Vorteilhafterweise ist das biegeelastische Element 17, insbesondere die Streben 21, aus einen Werkstoff mit einer Streckgrenze $R_E \geq 500$ N/mm$^2$ und/oder einer Elastizitätsgrenze $\sigma_E \geq 450$ N/mm$^2$ gebildet.

Vorteilhafterweise ist das magnetische Gebersystem 19 im Zwischenraum der Streben 21 des biegeelastischen Elementes 17 angeordnet. Das magnetische Gebersystem umfasst insbesondere ein magnetfelderzeugendes Element 23 und ein magnetfeldmessendes Element 25. Vorteilhafterweise ist das magnetfeldmessende Element 25 ein Hall-Sensor oder ein MR-Sensor.

In einer Ausführungsform der Erfindung ist es besonders vorteilhaft, wenn das magnetische Gebersystem und das biegeelastische Element derart ausgebildet sind, dass folgende Bedingung erfüllt ist:

$$0.02 \leq \left| \frac{c_{Torsion} * \Delta Phi_{Sensor}}{2 * M_{Getriebe}} \right| \leq 50$$

Dabei ist $M_{Getriebe}$ das Dauerdrehmoment des Getriebes 3, welches im Betrieb kurzzeitig überschritten werden kann.

$U_{Sensor}$ ist ein Ausgabesignal des magnetfeldmessenden Elementes 25. Phi(U) ist eine Winkelposition des magnetfeldmessenden Elementes 25 in Abhängigkeit vom Ausgabesignal $U_{Sensor}$. Die Spanne der Auslenkung der Winkelposition des magnetfeldmessenden Elementes 25 $\Delta Phi_{Sensor}$ zwischen dem Minimum und dem Maximum des Ausgangssignals des magnetfeldmessenden Elementes 25 ergibt sich gemäß

$$\Delta Phi_{Sensor} = Phi(U_{SensorMax}) - Phi(U_{SensorMin}).$$

Die mittlere Torsionsfederrate $c_{Torsion}$ des biegeelastischen Elementes 17 ergibt sich aus der Veränderung des Drehmomentes $\Delta M$ und der entsprechenden Veränderung der Winkelposition $\Delta Phi$ gemäß der Formel

$$c_{Torsion} = \Delta M / \Delta Phi.$$

Als beispielhafte Ausführungsform kann ein erfindungsgemäßes Getriebe 3 ein Dauerdrehmoment $M_{Getriebe}$ = 0,2 Nm aufweisen, wobei das magnetfeldmessende Element 25 eine Spanne der Auslenkung der Winkelposition $\Delta Phi_{Sensor}$ = 3.3° aufweist und das biegeelastische Element eine Torsionsfederrate $c_{Torsion}$ = 1,2 Nm/° aufweist. Für diese beispielhafte Ausführungsform beträgt dann die charakteristische Größe $\left| \frac{c_{Torsion} * \Delta Phi_{Sensor}}{2 * M_{Getriebe}} \right| = 9,9.$ In einer möglichen Ausführungsform ist das magnetfelderzeugende Element 23 vorteilhafterweise in radialer Richtung von dem magnetfeldmessenden Element 25 beabstandet angeordnet. Alternativ könnte die Anordnung axial oder tangential beabstandet ausgebildet sein. Dabei kann das magnetfelderzeugende Element 23 insbesondere am Außenumfang des Abtrieblagerflansches 11 angeordnet sein, und das magnetfeldmessende Element 25 am Innenumfang des biegeelastischen Elementes 17 angeordnet sein.

Vorteilhafterweise ist das magnetfelderzeugende Element 23 an einem ersten Teilelement des biegeelastischen Elementes 17 angeordnet, welches mit einer ersten axialen Extremität des biegeelastischen Elementes 17, insbesondere mit der dem Befestigungsflansch 13 zugewandten Stirnseite, verbunden ist, und das magnetfeldmessende Element 25 an einem zweiten Teileelement des biegeelastischen Elementes 17 angeordnet ist, welches mit einer gegenüberliegenden zweiten axialen Extremität des biegeelastischen Elementes 17, insbesondere mit der dem Getriebe 3 zugewandten Stirnseite, verbunden ist.

In einer alternativen oder zusätzlichen Ausgestaltung kann das magnetfelderzeugende Element 23 in axialer Richtung X-X von dem magnetfeldmessenden Element 25 beabstandet angeordnet sein. Dabei können das magnetfelderzeugende Element 23 und das magnetfeldmessende 25 Element axial vorzugsweise jeweils an den sich gegenüberliegenden Extremitäten des biegeelastischen Elementes 17 angeordnet sein.

Insbesondere sind das magnetfelderzeugende Element 23 und das magnetfeldmessende Element 25 derart in dem Drehmomentmessglied angeordnet, dass bei einer rotatorischen Auslenkung des biegeelastischen Elementes 17 das magnetfelderzeugende Element 23 zu dem magnetfeldmessenden Element 25 insbesondere tangential verschoben wird.

Vorteilhaftweise erzeugt das magnetfelderzeugende Element 23 ein 2poliges Feld in Richtung des magnetfeldmessenden Elementes 25, wobei die Magnetpole tangential zur Abtriebwelle 7 angeordnet sind.

In einer vorteilhaften Ausgestaltung ist das magnetfelderzeugende Element 23 im Gegensatz zum magnetfeldmessenden Element 25 radial außen am biegeelastischen Element 17 angeordnet. Dabei kann das magnetfelderzeugende Element 23 vorteilhafterweise insbesondere an einem Eisenrückschlusselement des biegeelastischen Elementes 17 angeordnet sein und durch die Magnetkräfte in Position gehalten werden.

In einer weiteren Ausgestaltung sind mehrere zugeordnete Paare von jeweils einem magnetfelderzeugenden Element 23 und einem magnetfeldmessenden Element 25 an dem biegeelastischen Element 17 angeordnet. Dabei sind die jeweiligen zugeordneten Paare von magnetfelderzeugenden Elementen 23 und magnetfeldmessenden Elementen 25 insbesondere jeweils in verschiedenen Zwischenräumen der Streben 21 des biegeelastischen Elementes 17 angeordnet.

Vorteilhafterweise ist mindestens ein zugeordnetes Paar von einem magnetfelderzeugenden Element 23 und einem magnetfeldmessenden Element 25 in einem Zwischenraum tangential über den Umfang beabstandet angeordnet. Alternativ oder ergänzend ist mindestens ein zugeordnetes Paar von einem magnetfelderzeugenden Element 23 und einem magnetfeldmessenden Element 25 in einem Zwischenraum in axialer Richtung X-X beabstandet angeordnet.

In einer besonders vorteilhaften Ausgestaltung bilden das Drehmomentmessglied 15 mit dem biegeelastischen Element 17 und dem magnetischen Gebersystem 19 zusammen mit dem Befestigungsflansch 13 und mit dem Abtrieblagerflansch 11 eine modulare Funktionsbaugruppe 27, die unabhängig von dem Getriebegehäuse 9 mit der Getriebemechanik und der Abtriebwelle 7 zusammensetzbar und als ein zusammengesetztes Teil auf die Abtriebwelle 7 aufsetzbar ausgebildet ist.

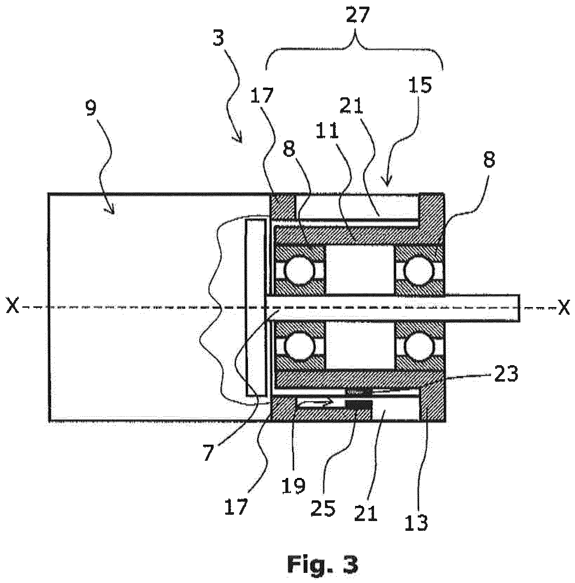

In Fig. 3 ist eine schematische Darstellung eines Teilschnitts durch eine zweite Ausführungsform eines erfindungsgemäßen Getriebes 3 mit Drehmomentmessglied 15 dargestellt. Vorteilhafterweise sind das biegeelastische Element 17 und der Befestigungsflansch 13 einteilig ausgebildet.

In einer weiteren vorteilhaften Ausgestaltung der Erfindung ist zwischen den Streben 21 des biegeelastischen Elementes 17 ein mechanischer Überlastschutz angeordnet. Insbesondere ist der Überlastschutz als ein mechanischer Anschlag ausgebildet, wobei der Anschlag zwischen der einen und der anderen axialen Seite des biegeelastischen Elementes 17 wirkt und somit einer zu weiten Verdrehung bei zu großen Antriebsmomenten entgegenwirkt.

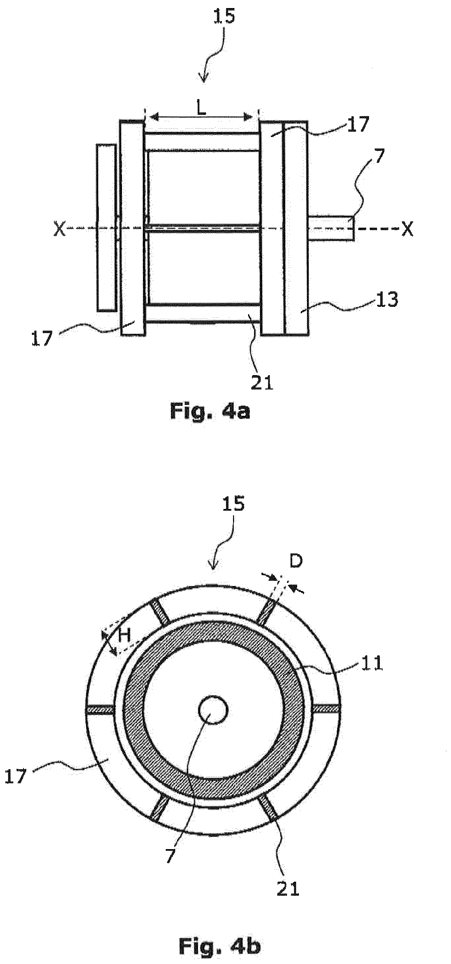

In Fig. 4a und Fig. 4b ist das Drehmomentmessglied 15 eines erfindungsgemäßen Getriebes 3 in einer schematischen Darstellung einer Seitenansicht und eines Querschnitts dargestellt.

Vorteilhafterweise weist das biegeelastische Element 17, insbesondere dessen Streben 21, eine axiale Länge L auf, die mindestens viermal so groß ist wie die tangentiale Dicke D des biegeelastischen Elementes 17, insbesondere der Streben 21.

In einer weiteren Ausführungsform weist das biegeelastische Element 17, insbesondere dessen Streben 21, eine radiale Höhe H auf, die mindestens doppelt so groß ist wie die tangentiale Dicke D des biegeelastischen Elementes 17, insbesondere der Streben 21.

**Bezugszeichenliste:**

| | |
|---|---|
| 1 | Klein- oder Kleinstantrieb |
| 3 | Getriebe |
| 5 | Anwendung |
| 7 | Abtriebwelle |
| 8 | Abtrieblager |
| 9 | Getriebegehäuse |

| | |
|---|---|
| 11 | Abtrieblagerflansch |
| 13 | Befestigungsflansch |
| 15 | Drehmomentmessglied |
| 17 | biegeelastisches Element |
| 19 | magnetisches Gebersystem |
| 21 | Streben |
| 23 | magnetfelderzeugendes Element |
| 25 | magnetfeldmessendes Element |
| 27 | Funktionsbaugruppe |
| X-X | axiale Richtung |
| D | tangentiale Dicke des biegeelastischen Elementes |
| H | radiale Höhe des biegeelastischen Elementes |
| L | axiale Länge des biegeelastischen Elementes |

**Patentansprüche**

1. Getriebe (3) für einen elektrischen Klein- oder Kleinstantrieb (1), aufweisend ein Getriebegehäuse (9), in dem eine Getriebemechanik angeordnet ist, einen Befestigungsflansch (13) zur Befestigung des Getriebes (3) an einer Anwendung (5), eine in mindestens einem Abtrieblager (8) gelagerte Abtriebwelle (7) zum Antreiben der Anwendung (5), wobei die Abtriebwelle (7) über die Getriebemechanik mit dem Klein- oder Kleinstantrieb (1) verbindbar ausgebildet ist, und ein Drehmomentmessglied (15) zur Erfassung des an der Abtriebwelle (7) beim Betrieb des Klein- oder Kleinstantrieb (1) anfallenden Drehmomentes mittels eines biegeelastischen Elementes (17), **dadurch gekennzeichnet, dass** an dem biegeelastischen Element (17) ein magnetisches Gebersystem (19) mit einem magnetfelderzeugenden Element (23) und einem magnetfeldmessenden Element (25) zur Messung einer rotatorischen Auslenkung des biegeelastischen Elementes (17) angeordnet ist, wobei das biegeelastische Element (17) axial zwischen der Getriebemechanik und dem Befestigungsflansch (13) angeordnet ist, und das biegeelastische Element (17) mindestens drei axial parallel zur Abtriebwelle (7) verlaufende Streben (21) umfasst, und die Streben des biegeelastischen Elementes eine radiale Höhe (H) aufweisen, die mindestens doppelt so groß ist wie eine tangentiale Dicke (D), und eine axiale Länge (L) aufweisen, die mindestens viermal so groß ist wie die tangentiale Dicke (D), und das magnetfelderzeugende Element (23) von dem magnetfeldmessenden Element (25) beabstandet im Zwischenraum der Streben (21) an dem biegeelastischen Element (17) angeordnet ist, wobei das magnetfelderzeugende Element (23) an einem ersten Teilelement des biegeelastischen Elementes (17) angeordnet ist, welches mit einer ersten axialen Extremität des biegeelastischen Elementes (17) verbunden ist, und das magnetfeldmessende Element (25) an einem zweiten Teilelement des biegeelastischen Elementes (17) angeordnet ist, welches mit einer gegenüberliegenden zweiten axialen Extremität des biegeelastischen Elementes (17) verbunden ist.

2. Getriebe (3) nach Anspruch 1, **dadurch gekennzeichnet, dass** das magnetische Gebersystem (19) derart an dem biegeelastischen Element (17) angeordnet ist, dass bei einer rotatorischen Auslenkung des biegeelastischen Elementes (17) das magnetfelderzeugende Element (23) zu dem magnetfeldmessenden Element (25) tangential verschoben wird.

3. Getriebe (3) nach Anspruch 1 oder 2, **dadurch gekennzeichnet, dass** das magnetfelderzeugende Element (23) ein 2poliges Feld in Richtung des magnetfeldmessenden Elementes (25) erzeugt, wobei die Magnetpole tangential zur Abtriebwelle (7) angeordnet sind.

4. Getriebe (3) nach einem der Ansprüche 1 bis 3, **dadurch gekennzeichnet, dass** das magnetfelderzeugende Element (23) im Gegensatz zum magnetfeldmessenden Element (25) radial außen am biegeelastischen Element (17) angeordnet ist.

5. Getriebe (3) nach einem der Ansprüche 1 bis 4, **dadurch gekennzeichnet, dass** das magnetfelderzeugende Element (23) an einem Eisenrückschlusselement des biegeelastischen Elementes (17) angeordnet ist und durch die Magnetkräfte in Position gehalten wird.

6. Getriebe (3) nach einem der Ansprüche 1 bis 5, **dadurch gekennzeichnet, dass** mehrere zugeordnete Paare von jeweils einem magnetfelderzeugenden Element (23) und einem magnetfeldmessenden Element (25) an dem biegeelastischen Element (17) angeordnet sind.

**7.** Getriebe (3) nach einem der Ansprüche 1 bis 6,
**dadurch gekennzeichnet, dass** das Drehmomentmessglied (15), der Befestigungsflansch (13) und ein Abtrieblagerflansch (11) eine modulare Funktionsbaugruppe (27) bilden, die unabhängig von dem Getriebegehäuse (9) mit der Getriebemechanik und der Abtriebwelle (7) zusammensetzbar und als ein zusammengesetztes Teil auf die Abtriebwelle (7) aufsetzbar ausgebildet ist.

**8.** Getriebe (3) nach einem der Ansprüche 1 bis 7,
**dadurch gekennzeichnet, dass** das biegeelastische Element (17) und der Befestigungsflansch (13) einteilig ausgebildet sind.

**9.** Getriebe (3) nach einem der Ansprüche 1 bis 8,
**dadurch gekennzeichnet, dass** in dem Abtrieblagerflansch (11) mindestens zwei Abtrieblager (8) angeordnet sind, wobei ein erstes Abtrieblager (8) axial vor dem biegeelastischen Element (17) und ein zweites Abtrieblager (8) axial hinter dem biegeelastischen Element (17) angeordnet ist.

**10.** Getriebe (3) nach einem der Ansprüche 1 bis 9,
**dadurch gekennzeichnet, dass** in dem Abtrieblagerflansch (11) mindestens zwei Abtrieblager (8) angeordnet sind, wobei ein oder zwei Abtrieblager (8) axial innerhalb des biegeelastischen Elements (17) angeordnet sind.

**11.** Getriebe (3) nach einem der Ansprüche 1 bis 10,
**dadurch gekennzeichnet, dass** ein mechanischer Überlastschutz zwischen den Streben (21) des biegeelastischen Elementes (17) angeordnet ist.

**12.** Getriebe (3) nach Anspruch 11,
**dadurch gekennzeichnet, dass** der Überlastschutz als ein mechanischer Anschlag ausgebildet ist, wobei der Anschlag zwischen der einen und der anderen axialen Seite des biegeelastischen Elementes (17) wirkt und somit einer zu weiten Verdrehung bei zu großen Antriebsmomenten entgegenwirkt.

**13.** Getriebe (3) nach einem der Ansprüche 1 bis 12,
**dadurch gekennzeichnet, dass** das biegeelastische Element (17), das magnetische Gebersystem (19) und die Getriebemechanik derart ausgebildet sind, dass das Produkt aus der mittleren Torsionsfederrate ($c_{Torsion}$) des biegeelastischen Elementes (17) mit der Spanne der Auslenkung der Winkelposition ($\Delta Phi_{Sensor}$) des magnetfeldmessenden Elementes (25) geteilt durch das doppelte Dauerdrehmoment ($M_{Getriebe}$) des Getriebes dem Betrag nach in einem Bereich von 0,02 bis 50 liegt.

**Claims**

**1.** A transmission (3) for an electric miniature drive or microdrive (1), having a transmission housing (9) in which a transmission mechanism is disposed, an attachment flange (13) for attaching the transmission (3) to an application (5), a driven shaft (7) for driving the application (5), which driven shaft (7) is supported in at least one driven bearing (8), wherein the driven shaft (7) is configured connectable via the transmission mechanism to the miniature or microdrive (1), and a torque measuring member (15) for the registration of the torque generated on the driven shaft (7) by means of a flexible element (17) during operation of the miniature drive or microdrive (1),
**characterized in that**
on the flexible element (17), a magnetic encoder system (19) is disposed having a magnetic field generating element (23) and a magnetic field measuring element (25) for measuring a rotatory displacement of the flexible element (17), wherein the flexible element (17) is disposed axially between the transmission mechanism and the attachment flange (13) and the flexible element (17) comprises at least three struts (21) extending axially parallel to the driven shaft (7) and the struts of the flexible element have a radial height that is at least twice as large as the tangential thickness (D), and have an axial length (L) that is at least four times as large as the tangential thickness (D), and the magnetic field generating element (23) is disposed in the intermediate space of the struts (21) on the elastic element (17) spaced apart from the magnetic field measuring element (25), wherein the magnetic field generating element (23) is disposed on a first partial element of the flexible element (17), which first partial element is connected to a first axial extremity of the flexible element (17), and the magnetic field measuring element (25) is disposed on a second partial element of the flexible element (17), which second partial element is connected to an opposing second axial extremity of the flexible element (17).

**2.** A transmission (3) according to claim 1,
**characterized in that** the magnetic encoder system (19) is disposed on the flexible element (17) such that in the event of a rotatory displacement of the flexible element (17) the magnetic field generating element (23) is tangentially displaced with respect to the magnetic field measuring element (25).

**3.** A transmission (3) according to claim 1 or 2,
**characterized in that** the magnetic field generating element (23) generates a two-pole field in the direction of the magnetic field measuring element (25), wherein the magnetic poles are disposed tangentially to the driven shaft (7).

**4.** A transmission (3) according to any one of claims 1 to 3,
**characterized in that** the magnetic field generating element (23) is disposed, in contrast to the magnetic field measuring element (25), radially outside on the flexible element (17).

**5.** A transmission (3) according to any one of claims 1 to 4,
**characterized in that** the magnetic field generating element (23) is disposed on an iron counterplate of the flexible element (17) and held in position by the magnetic forces.

**6.** A transmission (3) according to any one of claims 1 to 5,
**characterized in that** a plurality of respectively associated pairs of a magnetic field generating element (23) and a magnetic field measuring element (25) are disposed on the flexible element (17).

**7.** A transmission (3) according to any one of claims 1 to 6,
**characterized in that** the torque measuring member (15), the attachment flange (13), and a driven-bearing flange (11) form a functional subassembly (27) that can be assembled with the transmission mechanism and the driven shaft (7) independently of the transmission housing (9) and is configured such that it can be placed as an assembled part on the driven shaft (7).

**8.** A transmission (3) according to any one of claims 1 to 7,
**characterized in that** the flexible element (17) and the attachment flange (13) are configured in one piece.

**9.** A transmission (3) according to any one of claims 1 to 8,
**characterized in that** at least two driven bearings (8) are disposed in the driven-bearing flange (11), wherein a first driven bearing (8) is disposed axially in front of the flexible element (17), and a second driven bearing (8) is disposed axially behind the flexible element (17).

**10.** A transmission (3) according to any one of claims 1 to 9,
**characterized in that** at least two driven bearings (8) are disposed in the driven-bearing flange (11), wherein one or two driven bearings (8) are disposed axially inside the flexible element (17).

**11.** A transmission (3) according to any one of claims 1 to 10,
**characterized in that** a mechanical overload protection is disposed between the struts (21) of the elastic element (17).

**12.** The transmission (3) according to claim 11,
**characterized in that** the overload protection is configured as a mechanical stop, wherein the stop acts between the one and the other axial side of the flexible element (17) and thus acts against too far a rotation in the event of too large drive torques.

**13.** A transmission (3) according to any one of claims 1 to 12,
**characterized in that** the flexible element (17), the magnetic encoder system (19) and the drive mechanism are configured such that the product of the average torsion spring rate ($C_{Torsion}$) of the flexible element (17) with the range of the displacement of the angular position ($\Delta Phi_{Sensor}$) of the magnetic field measuring element (25) divided by double the continuous torque ($M_{Transmission}$) of the transmission is in the range of 0.02 to 50.

**Revendications**

**1.** Engrenage (3) pour un mécanisme d'entraînement (1) électrique petit ou miniature, possédant un carter d'engrenage (9) dans lequel est disposée un mécanisme d'engrenage, une bride de fixation (13) destinée à la fixation de l'engrenage (3) à une application (5), un arbre de prise de force (7) monté dans au moins un palier de prise de force (8) et servant à entraîner l'application (5), l'arbre de prise de force (7) étant configuré pour pouvoir être relié au mécanisme d'entraînement (1) petit ou miniature par le biais du mécanisme d'engrenage, et un organe de mesure du couple (15) destiné à acquérir le couple obtenu au niveau de l'arbre de prise de force (7) lors du fonctionnement du mécanisme d'entraînement (1) petit ou miniature au moyen d'un élément élastique en flexion (17),
**caractérisé en ce que**
un système transmetteur magnétique (19) comprenant un élément générateur de champ magnétique (23) et un élément de mesure de champ magnétique (25) destiné à mesurer une déviation rotatoire de l'élément élastique en flexion (17) est disposé sur l'élément élastique en flexion (17), l'élément élastique en flexion (17) étant disposé axialement entre le mécanisme d'engrenage et la bride de fixation (13), et l'élément élastique en flexion (17) comportant au moins trois entretoises (21) qui s'étendent dans le sens axial parallèlement à l'arbre de prise de force (7), et les entretoises de l'élément élastique en flexion possédant une hauteur radiale (H) qui est au moins égale au double d'une épaisseur tangentielle (D) et possédant une longueur axiale (L) qui est au moins quatre fois plus grande que l'épaisseur tangentielle (D), et l'élément générateur de champ magnétique (23) étant disposé espacé de l'élément de mesure de champ magnétique (25) dans l'espace intermédiaire des entretoises (21) sur l'élément élastique en flexion (17), l'élément générateur de champ magnétique (23) étant disposé sur un premier élément partiel de l'élément élastique en flexion (17), lequel est relié à une première extrémité axiale de l'élément élastique en flexion (17), et l'élément de mesure de champ magnétique (25) étant disposé sur un deuxième élément partiel de l'élément élastique en flexion (17), lequel est relié à une deuxième extrémité axiale opposée de l'élément élastique en flexion (17).

2. Engrenage (3) selon la revendication 1,
   **caractérisé en ce que** le système transmetteur magnétique (19) est disposé sur l'élément élastique en flexion (17) de telle sorte que lors d'une déviation rotatoire de l'élément élastique en flexion (17), l'élément générateur de champ magnétique (23) est décalé tangentiellement par rapport à l'élément de mesure de champ magnétique (25).

3. Engrenage (3) selon la revendication 1 ou 2,
   **caractérisé en ce que** l'élément générateur de champ magnétique (23) génère un champ bipolaire en direction de l'élément de mesure de champ magnétique (25), les pôles magnétiques étant disposés tangentiellement par rapport à l'arbre de prise de force (7).

4. Engrenage (3) selon l'une des revendications 1 à 3, **caractérisé en ce que** l'élément générateur de champ magnétique (23), contrairement à l'élément de mesure de champ magnétique (25), est disposé radialement à l'extérieur sur l'élément élastique en flexion (17).

5. Engrenage (3) selon l'une des revendications 1 à 4, **caractérisé en ce que** l'élément générateur de champ magnétique (23) est disposé sur un élément de terminaison arrière en fer de l'élément élastique en flexion (17) et est maintenu en position par les forces magnétiques.

6. Engrenage (3) selon l'une des revendications 1 à 5, **caractérisé en ce que** plusieurs paires associées composées respectivement d'un élément générateur de champ magnétique (23) et d'un élément de mesure de champ magnétique (25) sont disposées sur l'élément élastique en flexion (17).

7. Engrenage (3) selon l'une des revendications 1 à 6, **caractérisé en ce que** l'organe de mesure du couple (15), la bride de fixation (13) et une bride de palier de prise de force (11) forment un sous-ensemble fonctionnel modulaire (27) qui est configuré pour pouvoir être assemblé indépendamment du carter d'engrenage (9) avec le mécanisme d'engrenage et l'arbre de prise de force (7) et être monté sous la forme d'une pièce assemblée sur l'arbre de prise de force (7).

8. Engrenage (3) selon l'une des revendications 1 à 7, **caractérisé en ce que** l'élément élastique en flexion (17) est la bride de fixation (13) sont réalisés d'un seul tenant.

9. Engrenage (3) selon l'une des revendications 1 à 8, **caractérisé en ce qu'**au moins deux paliers de prise de force (8) sont disposés dans la bride de palier de prise de force (11), un premier palier de prise de force (8) étant disposé devant l'élément élastique en flexion (17) dans le sens axial et un deuxième palier de prise de force (8) étant disposé derrière l'élément élastique en flexion (17) dans le sens axial.

**10.** Engrenage (3) selon l'une des revendications 1 à 9, **caractérisé en ce qu'**au moins deux paliers de prise de force (8) sont disposés dans la bride de palier de prise de force (11), un ou deux paliers de prise de force (8) étant disposés dans le sens axial à l'intérieur de l'élément élastique en flexion (17).

**11.** Engrenage (3) selon l'une des revendications 1 à 10, **caractérisé en ce qu'**une protection mécanique contre les surcharges est disposée entre les entretoises (21) de l'élément élastique en flexion (17).

**12.** Engrenage (3) selon la revendication 11,
**caractérisé en ce que** la protection mécanique contre les surcharges est réalisée sous la forme d'une butée mécanique, la butée agissant entre l'un et l'autre côté de l'élément élastique en flexion (17) et contrant ainsi une torsion excessive dans le cas de couples d'entraînement trop élevés.

**13.** Engrenage (3) selon l'une des revendications 1 à 12, **caractérisé en ce que** l'élément élastique en flexion (17), le système transmetteur magnétique (19) et le mécanisme d'engrenage sont configurés de telle sorte que le produit du facteur de rappel en torsion ($C_{Torsion}$) moyen de l'élément élastique en flexion (17) par l'amplitude de la déviation de la position angulaire ($\Delta Phi_{Sensor}$) de l'élément de mesure de champ magnétique (25), divisé par le double du couple continu ($M_{Engrenage}$) de l'engrenage a une valeur absolue comprise dans la plage de 0,02 à 50.

**Fig. 1**

Fig. 2

**Fig. 3**

15

L

17

7

X — · — · — · — · — · — · — · — X

17

13

21

**Fig. 4a**

15

D

H

11

17

7

21

**Fig. 4b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006057539 A1
- EP 1719991 A1
- US 6694828 B